Europäisches Patentamt

European Patent Office

Office européen des brevets

(19)

(11) **EP 0 797 084 B1**

(12) **EUROPÄISCHE PATENTSCHRIFT**

(45) Veröffentlichungstag und Bekanntmachung des Hinweises auf die Patenterteilung:
**17.01.2001 Patentblatt 2001/03**

(51) Int Cl.$^7$: **G01L 9/00**, G01L 27/00

(21) Anmeldenummer: **96104655.4**

(22) Anmeldetag: **23.03.1996**

(54) **Verfahren zum Herstellen von kapazitiven, in Nullpunkt-Langzeit-Fehlerklassen sortierten Keramik-Absolutdruck-Sensoren**

Method of manufacturing capacitive ceramic absolute pressure sensors classified in zero-point long-term stability groups

Méthode de fabrication des capteurs céramiques capacitifs de pression absolue classifiés en groupes avec stabilité à long terme du point-zéro

(84) Benannte Vertragsstaaten:
**CH DE DK FR GB IT LI NL**

(43) Veröffentlichungstag der Anmeldung:
**24.09.1997 Patentblatt 1997/39**

(73) Patentinhaber: **Endress + Hauser GmbH + Co.**
**79689 Maulburg (DE)**

(72) Erfinder:
• **Hegner, Frank, Dr.**
**79540 Lörrach (DE)**

• **Klausmann, Lukas, Dipl.Ing.(FH)**
**79539 Lörrach (DE)**

(74) Vertreter: **Morstadt, Volker, Dipl.-Ing.**
**Endress + Hauser**
**Zentrale Patentabteilung**
**Postfach 2222**
**79574 Weil am Rhein (DE)**

(56) Entgegenhaltungen:
**EP-A- 0 512 794**     **US-A- 4 369 661**
**US-A- 5 001 595**

**Beschreibung**

Die Erfindung betrifft ein Verfahren zum Herstellen von kapazitiven, in Nullpunkt-Langzeitstabilität-Fehlerklassen sortierten Absolutdruck-Sensoren aus Aluminiumoxid-Keramik.

In der US-A 50 01 595 ist ein Verfahren zum Herstellen von kapazitiven Drucksensoren aus Aluminiumoxid-Keramik beschrieben, das folgende Schritte umfaßt:

-   ein scheibenförmiger Grundkörper aus Aluminiumoxid-Keramik wird auf einer Oberfläche in der Nähe von deren Rand mit einer ringförmigen ersten, als eine erste Elektrode dienenden Metallschicht und im Zentrum der Oberfläche mit einer kreisförmigen zweiten, als eine zweite Elektrode dienenden Metallschicht versehen,

    --   welche Elektroden voneinander isoliert sind,

-   eine Membran aus Aluminiumoxid-Keramik wird an einer Oberfläche mit einer weiteren, als dritte Elektrode dienenden Metallschicht versehen,
-   die drei Elektroden werden mit äußeren Anschlüssen versehen,
-   Grundkörper und Membran werden mit den einander zugewandten, die Elektroden tragenden Oberflächen an jeweils einem äußeren Rand durch Zwischenlage eines Aktivhartlotrings unter Bildung einer Kammer dicht miteinander verbunden,
-   wodurch sich bei Einwirkung eines äußeren Drucks p auf den Drucksensor zwischen der ersten und der dritten Elektrode eine praktisch druck-unabhängige Referenz-Kapazität $C_r$ und zwischen der zweiten und der dritten Elektrode eine druck-abhängige Kapazität $C_p$ ergibt.

Es ist üblich, Grundkörper und Membran mittels des Aktivhartlotrings entweder in Vakuum dicht miteinander zu verbinden oder zunächst in Schutzgas dicht miteinander zu verbinden und die Kammer danach zu evakuieren und dicht zu verschließen, wenn mittels des vorbeschriebenen Verfahrens Absolutdruck-Sensoren hergestellt werden sollen. Ein in der Praxis üblicher Druckwert $p_0$ dieses Vakuums ist z.B. $p_0 = 3 \cdot 10^{-4}$ Pa (= $3 \cdot 10^{-6}$ mbar).

Bei derartigen Absolutdruck-Sensoren besteht hinsichtlich der zu spezifierenden Werte der Langzeit-Stabilität ihres jeweiligen kapazitiven Nullpunkts der seitens des Herstellers zu garantieren ist, die folgende Problemlage:

Da sich der Nullpunkt ändert, wenn der im Inneren des Absolutdruck-Sensors herrschende geringe, durch das bei seiner Herstellung erzeugte Vakuum bedingte Innendruck sich ändert, treten solche Änderungen dann auf, wenn der Absolutdruck-Sensor material- und/oder herstellungs-bedingt undicht ist, d.h. also, wenn der Innendruck sich, sei es auch über lange Zeit und langsam, erhöht.

So führt z.B. bei einem für $2 \cdot 10^4$ Pa (= 200 mbar) Nenndruck ausgelegten Absolutdruck-Sensor eine Undichtheit mit einer Leckrate von $1,6 \cdot 10^{-11}$ Pa·l/s (= $1,6 \cdot 10^{-13}$ mbar·l/s) zu einer auf die Meßwert-Spanne des Absolutdruck-Sensors bezogenen Drift des Nullpunkts von 0,1 %/a; zur Definition der Meßwert-Spanne siehe unten.

Die erwähnte Innendruck-Erhöhung ist also zugleich ein Anzeichen und ein Maß einerseits für die Undichtheit des Absolutdruck-Sensors und andererseits für die entsprechende Änderung seines nach der Herstellung zunächst feststellbaren, also ursprünglichen, Wertes des Nullpunkts.

Wie von den Erfindern festgestellt wurde, ändert sich mit der Innendruck-Erhöhung nicht nur der Nullpunkt, sondern auch dessen Temperatur-Koeffizient, so daß auch dieser zur Feststellung der Langzeit-Stabilität des Nullpunkts dienen kann.

Nach den Erkenntnissen der Erfinder läßt sich somit die Langzeit-Stabilität des Nullpunkts entweder durch Messung von mindestens zwei Werten des Nullpunkts oder von mindestens zwei Werten des Temperatur-Koeffizienten, nämlich einerseits des erwähnten jeweiligen ursprünglichen Wertes und eines jeweiligen späteren Wertes, und durch Vergleich dieser jeweiligen beiden Werte, bestimmen. Bis zur Ermittlung des späteren Wertes muß aber eine ausreichende Wartezeit verstrichen sein, um überhaupt eine Abweichung des späteren vom ursprünglichen Wert meßtechnisch feststellen zu können.

Bei einer zu garantierenden Nullpunkt-Langzeit-Stabilität in der Größenordnung von z.B. 0,1 %/a muß somit theoretisch mindestens ein Jahr (= 1 a) gewartet werden, bis eine Nullpunktdrift von 0,1 % meßbar ist; in praxi sind es sogar mehrere Jahre, da dieser Drift-Meßwert ausreichend von der Meßunsicherheit der Meßvorrichtung unterscheidbar sein muß. Dies ist aber für eine heute sinnvolle Produktion mit möglichst geringem Anteil von Fertigung auf Lager ("lean production") nicht akzeptabel.

Es ist also nicht damit getan, die Keramik-Absolutdruck-Sensoren, wie vorbeschrieben und üblich, physisch herzustellen, da in dieser Form ihre Eigenschaften und somit ihre zu garantierende Genauigkeit noch unbekannt ist; sie sind daher in dieser Form noch nicht marktfähig. Zu ihrer Herstellung als marktfähiges Produkt gehört vielmehr auch die Ermittlung der Langzeit-Stabilität und das Sortieren in Langzeit-Stabilitäts-Klassen.

Es ist daher eine Aufgabe der Erfindung, im erläuterten Sinne vervollständigte Verfahren zum Herstellen von marktfähigen Keramik-Absolutdruck-Sensoren anzugeben.

Hierzu besteht eine erste Variante der Erfindung in einem Verfahren zum Herstellen von in hochgenauen, auf eine Meßwert-Spanne bezogenen Nullpunkt-Langzeitstabilität-Fehlerklassen sortierten kapazitiven Absolutdruck-Sensoren aus Aluminiumoxid-Keramik, das folgende Schritte umfaßt:

- ein scheibenförmiger Grundkörper wird auf einer Oberfläche in der Nähe von deren Rand mit einer ringförmigen ersten, als eine erste Elektrode dienenden Metallschicht und im Zentrum der Oberfläche mit einer kreisförmigen zweiten, als eine zweite Elektrode dienenden Metallschicht versehen,

-- welche Elektroden voneinander isoliert sind,

- eine Membran wird an einer Oberfläche mit einer weiteren, als dritte Elektrode dienenden Metallschicht versehen,
- die drei Elektroden werden mit äußeren Anschlüssen versehen,
- Grundkörper und Membran werden mit den einander zugewandten, die Elektroden tragenden Oberflächen an jeweils einem äußeren Rand durch Zwischenlage eines Aktivhartlotrings unter Bildung einer Kammer

-- entweder in Vakuum dicht miteinander verbunden
-- oder in Schutzgas dicht miteinander verbunden und die Kammer wird danach evakuiert,

- wodurch sich bei Einwirkung eines äußeren Drucks p auf den Absolutdruck-Sensor zwischen der ersten und der dritten Elektrode eine praktisch druck-unabhängige Referenz-Kapazität $C_r$ und zwischen der zweiten und der dritten Elektrode eine druck-abhängige Kapazität $C_p$ ergibt,
- für jeden Absolutdruck-Sensor wird mittels einer hochgenauen Kapazitätsnullpunkt-Meßvorrichtung, die einen garantierten Nullpunkt-Meßfehler $F_n$ hat, bei einem benutzerseitig vorgebbaren ersten Temperaturwert, insb. bei Raumtemperatur, unter Vakuum, entsprechend p --> 0, anhand der Gleichung $c = (C_p - C_r)/C_p = k_1(p - p_0) + k_0$ , worin $p_0$ der Druck des im Inneren der Kammer vorhandenen Vakuums und $k_0$, $k_1$ sensor-spezifische Konstanten sind, ein erster Nullwert $c_{n1} = - k_1 p_0 + k_0$ bestimmt,
- für jeden Absolutdruck-Sensor wird mittels derselben Kapazitätsmeßvorrichtung ein zweiter Nullwert $c_{n2} = - k_1 p_0'$ $+ k_0$ bestimmt,

-- nachdem während einer Zeitdauer t die Absolutdruck-Sensoren in einem Gas derart gelagert worden sind,

--- daß von dessen folgenden drei Parametern Druck, Temperatur und Molekulargewicht mindestens einer gegenüber normalen Atmosphären-Bedingungen, nämlich Raumtemperatur, Luft und deren Normaldruck, erhöht worden war, nämlich die Temperatur und/oder der Druck, bzw. erniedrigt worden war, nämlich das Molekulargewicht,

- es wird die Differenz $\delta c_n$ des ersten und des zweiten Nullwerts $\delta c_n = c_{n1} - c_{n2} = - k_1(p_0 + p_0') = - k_1 \delta p_0$ gebildet,
- es wird der Wert $\delta c_n / c_{sp}$ der auf die Meßwert-Spanne $c_{sp}$ bezogenen Differenz $\delta c_n = - k_1 \delta p_0$ jedes Absolutdruck-Sensors gebildet und mit dem auf die Meßwert-Spanne $c_{sp}$ bezogenen Wert $F_n / c_{sp}$ des Nullpunkt-Meßfehlers $F_n$ der Kapazitätsnullpunkt-Meßvorrichtung verglichen, und
- die Nullpunkt-Langzeitstabilität-Fehlerklassen werden anhand von einem mit einem Sicherheitsabstand oberhalb des auf die Meßwert-Spanne $c_{sp}$ bezogenen Wertes $F_n / c_{sp}$ des Nullpunkt-Meßfehlers $F_n$ benutzerseitig vorgebbaren Minimalwert gebildet.

Ferner besteht eine zweite Variante der Erfindung in einem Verfahren zum Herstellen von in hochgenauen, auf eine Meßwert-Spanne bezogenen Nullpunkt-Langzeitstabilitäts-Fehlerklassen sortierten kapazitiven Absolutdruck-Sensoren aus Aluminiumoxid-Keramik, das folgende Schritte umfaßt:

- ein scheibenförmiger Grundkörper wird auf einer Oberfläche in der Nähe von deren Rand mit einer ringförmigen ersten, als eine erste Elektrode dienenden Metallschicht und im Zentrum der Oberfläche mit einer kreisförmigen zweiten, als eine zweite Elektrode dienenden Metallschicht versehen,

-- welche Elektroden voneinander isoliert sind,

- eine Membran wird an einer Oberfläche mit einer weiteren, als dritte Elektrode dienenden Metallschicht versehen,
- die drei Elektroden werden mit äußeren Anschlüssen versehen,
- Grundkörper und Membran werden mit den einander zugewandten, die Elektroden tragenden Oberflächen an jeweils einem äußeren Rand durch Zwischenlage eines Aktivhartlotrings unter Bildung einer Kammer

-- entweder in Vakuum dicht miteinander verbunden

-- oder in Schutzgas dicht miteinander verbunden und die Kammer wird danach evakuiert,

- wodurch sich bei Einwirkung eines äußeren Drucks p auf den Absolutdruck-Sensor zwischen der ersten und der dritten Elektrode eine praktisch druckunabhängige Referenz-Kapazität $C_r$ und zwischen der zweiten und der dritten Elektrode eine druck-abhängige Kapazität $C_p$ ergibt, deren druck-abhängiges Kapazitätsverhältnis $c = (C_p - C_r)/C_p = k_1(p - p_0) + k_0$ ist, worin $p_0$ der Druck des im Inneren der Kammer vorhandenen Vakuums und $k_0$, $k_1$ sensor-spezifische Konstanten sind,

- für jeden Absolutdruck-Sensor wird mittels einer hochgenauen Kapazitätsnullpunkt-Temperaturkoeffizient-Meßvorrichtung, die einen garantierten Temperaturkoeffizient-Meßfehler $F_T$ hat, unter Vakuum, entsprechend p --> 0, bei mindestens zwei benutzerseitig vorgebbaren unterschiedlichen Temperaturwerten $T_1$, $T_2$, von denen einer insbesondere die Raumtemperatur ist, anhand der Gleichung $Tk_c = (c_{T2} - c_{T1})/(T_2 - T_1)$ ein erster Wert $Tk_{c1}$ des Temperatur-Koeffizienten $Tk_c$ des Nullpunkts bestimmt, nämlich

$$Tk_{c1} = (C_{p2} \cdot C_{r1} - C_{p1} \cdot C_{r2})/\{C_{p2} \cdot C_{p1}(T_2 - T_1)\}_{p=p0}$$

- für jeden Absolutdruck-Sensor wird mittels derselben Kapazitätsnullpunkt-Temperaturkoeffizient-Meßvorrichtung und bei den gleichen Temperaturwerten $T_1$, $T_2$ ein zweiter Wert $Tk_{c2}$ des Temperatur-Koeffizienten $Tk_c$ des Nullpunkts bestimmt, nämlich

$$Tk_{c2} = (C_{p2} \cdot C_{r1} - C_{p1} \cdot C_{r2})/\{C_{p2} \cdot C_{p1}(T_2 - T_1)\}_{p=p0},$$

-- nachdem während einer Zeitdauer t die Absolutdruck-Sensoren in einem Gas derart gelagert worden sind,

--- daß von dessen folgenden drei Parametern Druck, Temperatur und Molekulargewicht mindestens einer gegenüber normalen Atmosphären-Bedingungen, nämlich Raumtemperatur, Luft und deren Normaldruck, erhöht worden war, nämlich die Temperatur und/oder der Druck, bzw.erniedrigt worden war, nämlich das Molekulargewicht,

- es wird die Differenz $\delta Tk_c$ des ersten und des zweiten Wertes des Temperatur-Koeffizienten $\delta Tk_c = Tk_{c1} - Tk_{c2}$ gebildet,

- es wird der Wert $\delta Tk_c/c_{sp}$ der auf die Meßwert-Spanne $c_{sp}$ bezogenen Differenz $\delta Tk_c = Tk_{c1} - Tk_{c2}$ jedes Absolutdruck-Sensors gebildet und mit dem auf die Meßwert-Spanne $c_{sp}$ bezogenen Wert $F_T/c_{sp}$ des Temperaturkoeffizient-Meßfehlers $F_T$ der Kapazitätsnullpunkt-Temperaturkoeffizient-Meßvorrichtung verglichen, und

- die Nullpunkt-Langzeitstabilität-Fehlerklassen werden anhand von einem mit einem Sicherheitsabstand oberhalb des auf die Meßwert-Spanne $c_{sp}$ bezogenen Wertes $F_T/c_{sp}$ des Temperaturkoeffizient-Meßfehlers $F_T$ benutzerseitig vorgebbaren Minimalwert gebildet.

Nach einer jeweiligen bevorzugten Ausgestaltung der beiden Varianten der Erfindung werden die erste und die zweite Elektrode so aufgebracht, daß sie praktisch den gleichen Flächeninhalt aufweisen.

Ein Vorteil der Erfindung besteht darin, daß Zahlenwerte der Langzeit-Stabilität angebbar und somit garantierbar sind. Ein weiterer Vorteil besteht darin, daß die oben erwähnte Wartezeit erheblich reduzierbar ist, z.B. auf wenige Wochen.

Beide Varianten der Erfindung werden nun anhand von Ausführungsbeispielen näher erläutert.

Die beiden Verfahrensvarianten der Erfindung gehen von bereits vorgefertigten scheibenförmigen Grundkörpern und Membranen, jeweils aus Aluminiumoxid, insbesondere mit einer Reinheit von 96 Gew%, aus, d.h. also von bereits fertig gesinterten Keramik-Grundkörpern und Keramik-Membranen. Grundkörper und Membranen sind bevorzugt kreiszylindrisch und haben den gleichen Durchmesser.

Ferner gehen die beiden Verfahrensvarianten von bereits vorgefertigten Aktivhartlotringen entsprechenden Durchmessers aus, die bevorzugt aus einer der ternären Zirconium/Nickel/Titan-Legierungen bestehen, wie sie in der US-A 53 34 344 beschrieben sind.

Zur Vereinfachung der sprachlichen Darstellung wird im folgenden die Herstellung eines einzelnen Absolutdruck-Sensors beschrieben, obwohl wie üblich an einer Fertigungs-Charge vieler Absolutdruck-Sensoren die zu schildernden Verfahrensschritte ablaufen.

Auf einer Oberfläche des Grundkörpers wird in der Nähe von deren Rand eine ringförmige erste, als eine erste Elektrode dienende Metallschicht und im Zentrum dieser Oberfläche eine kreisförmige zweite, als eine zweite Elektrode dienende Metallschicht so aufgebracht, daß die beiden Elektroden galvanisch voneinander isoliert sind.

Auf einer Oberfläche der Membran wird eine weitere, sie praktisch vollständig bedeckende, als dritte Elektrode dienende Metallschicht aufgebracht, und die drei Elektroden werden mit äußeren Anschlüssen versehen.

Hierzu können bevorzugt verschiedene geeignete Metalle verwendet und verschiedene geeignete Verfahren angewendet werden, wie sie z.B. in den US-A 50 01 595, US-A 51 94 697, US-A 50 50 035, und in der CA-A 20 66 325 beschrieben sind.

Jeweils ein in der bisher erläuterten Weise vorbereiteter und bestückter Grundkörper und jeweils eine in der bisher erläuterten Weise vorbereitete und bestückte Membran werden mit den einander zugewandten, die Elektroden tragenden Oberflächen an jeweils einem äußeren Rand durch Zwischenlage des Aktivhartlotrings unter Bildung einer Kammer entweder in Vakuum oder in Schutzgas dicht miteinander verbunden, also zusammengefügt; im letzteren Fall muß die Kammer nach der Fügung noch evakuiert und dann dicht verschlossen werden.

Nach diesen Verfahrensschritten sind die Absolutdruck-Sensoren als elektronische Komponenten, allerdings lediglich prima facie, fertiggestellt. Ausschließlich in diesem Sinne wird daher im folgenden von "fertigen" Absolutdruck-Sensoren gesprochen.

Bei Einwirkung eines äußeren Drucks p auf einen solchen Absolutdruck-Sensor ergibt sich zwischen der ersten und der dritten Elektrode eine praktisch druck-unabhängige Referenz-Kapazität $C_r$ und zwischen der zweiten und der dritten Elektrode eine druck-abhängige Kapazität $C_p$. Da beiden Kapazitäten die dritte Elektrode gemeinsam ist, läßt sich mittels geeigneter Meßschaltungen ein Kapazitätsverhältnis $c = (C_p - C_r)/C_p$ auswerten, wie sie z.B. in den US-A 52 10 501, US-A 52 57 210 und US-A 54 51 940 beschrieben sind.

Diese Meßschaltungen können auch Schaltungsteile zur Linearisierung und z.B. zur Temperatur-Kompensation enthalten und werden z.B. in Form einer Hybridschaltung baulich mit den Absolutdruck-Sensoren vereinigt.

Es ist hervorzuheben, daß es sich bei den im folgenden erwähnten Messungen nicht um solche mittels derartiger Meßschaltungen handelt, sondern um direkte Messungen des Kapazitäts-Verhältnisses c an den evakuierten Absolutdruck-Sensoren mittels einer hochgenauen Kapazitätsnullpunkt-Meßvorrichtung, die einen garantierten Kapazitätsnullpunkt-Meßfehler $F_n$ hat, bzw. mittels einer hochgenauen Kapazitätsnullpunkt-Temperaturkoeffizient-Meßvorrichtung, die einen garantierten Kapazitätsnullpunkt-Temperaturkoeffizient-Meßfehler $F_T$ hat.

Nach der ersten Variante der Erfindung wird zunächst bei einem benutzerseitig vorgebbaren ersten Temperaturwert, insbesondere bei Raumtemperatur (= 20 °C), unter Vakuum, also p --> 0 - das entspricht p ≈ 0 - ein erster Nullwert $c_{n1} = - k_1 p_0 + k_0$ anhand der obigen Gleichung $c = (C_p - C_r)/C_p$ gebildet, die auch wie folgt geschrieben werden kann: $c = k_1(p - p_0) + k_0$. Darin ist $p_0$ der Druck des im Inneren der Kammer vorhandenen Vakuums, und $k_0$, $k_1$ sind sensor-spezifische Konstanten.

Es ist sinnvoll, eine Meßwert-Spanne $c_{sp}$ des Absolutdruck-Sensors wie folgt zu definieren:

$$c_{sp} = \{(C_p - C_r)/C_p\}_{p=pn} - \{(C_p - C_r)/C_p\}_{p=0}.$$

In Worten ausgedrückt ist die Meßwert-Spanne $c_{sp}$ also der zwischen dem Druckwert null und dem Druckwert des Nenndrucks pn liegende Meßbereich von auf den Absolutdruck-Sensor einwirkenden, zu messenden Druckwerten. Als Nenndruck pn wird dabei der vom Hersteller festgelegte Druckwert bezeichnet, bis zu dem einwandfreie Funktion garantiert ist. Ein typischer Wert der Meßwert-Spanne ist $c_{sp} = 0,15$.

Ist ein im oben definierten Sinne "fertiger" Absolutdruck-Sensor undicht, so erhöht sich mit der Zeit mehr oder weniger stark dessen Innendruck, und das ursprüngliche Vakuum verschlechtert sich.

Eine nach einer Zeitdauer t erfolgende zweite Messung mittels derselben Kapazitätsnullpunkt-Meßvorrichtung wie bei der ersten Messung ergibt somit einen von deren Nullwert $c_{n1}$ abweichenden zweiten Nullwert $c_{n2} = - k_1 p_0' + k_0$. Die Differenz $\delta c_n = c_{n1} - c_{n2} = - k_1(p_0 + p_0') = - k_1 \delta p_0$ dieser beiden Nullwerte ist somit ein Maß für die Undichtheit.

Soll nun z.B. eine Nullpunkt-Langzeitstabilität von < 0,1 %/a garantiert werden können, so darf der (mathematische) Betrag der Differenz $\delta c_n = - k_1 \delta p_0$, bezogen auf die Meßwert-Spanne $c_{sp}$, maximal gleich 0,1 %/a sein; es gilt also: $|\delta c_n/c_{sp}| \leq 0,1$ %/a.

Es wird vorausgesetzt, daß die beiden Messungen zu den erwähnten Zeitpunkten, nämlich zu Beginn und am Ende der Zeitdauer t, mit demselben Nullpunkt-Meßfehler $F_n$ der hochgenauen Kapazitätsnullpunkt-Meßvorrichtung behaftet sind, daß also der vom Hersteller der Kapazitätsnullpunkt-Meßvorrichtung garantierte Nullpunkt-Meßfehler $F_n$ sich nicht ändert.

Dieser Nullpunkt-Meßfehler $F_n$ liegt aber in derselben Größenordnung wie die gemessene, auf die Meßwert-Spanne bezogene Differenz $\delta c_n/c_{sp}$, d.h. erst nach der eingangs erwähnten Zeit von einigen Jahren ist $\delta c_n/c_{sp}$ so groß geworden, daß es sich vom Nullpunkt-Meßfehler $F_n$ meßbar unterscheidet, also z.B. mindestens gleich $2 \cdot F_n$ ist.

Die folgenden Verfahrensschritte der ersten Variante der Erfindung dienen nun der Abkürzung dieser zu langen Zeit, also dazu, die Signifikanz von $\delta c_n/c_{sp}$ gegenüber $F_n$ schon zu einem wesentlich früheren Zeitpunkt eintreten zu lassen.

Dazu werden die Absolutdruck-Sensoren während einer Zeitdauer t in einem Gas derart gelagert, z.B. indem sie in einen das Gas enthaltenden Behälter eingeschlossen werden, daß von den folgenden drei Parametern Druck, Temperatur und Molekulargewicht des Gases mindestens ein Parameter gegenüber normalen Atmosphären-Bedingungen, nämlich Raumtemperatur, Luft und Normaldruck der letzteren, erhöht ist, nämlich die Temperatur und/oder der Druck, bzw. erniedrigt ist, nämlich das Molekulargewicht. Die Innendruck-Änderung ist direkt proportional zur Zeit t.

Die Erniedrigung des Molekulargewichts gegenüber dem von Luft läßt sich durch die Wahl von Wasserstoff oder Helium als Gas, in dem die Absolutdruck-Sensoren gelagert werden, erreichen. Aufgrund von deren geringerem Molekulargewicht als Luft gelangen die Moleküle schneller als die von Luft durch Undichtheiten in die Kammer der Absolutdruck-Sensoren, so daß sich deren Vakuum schneller verschlechtert und daher $\delta c_n/c_{sp}$ schneller signifikante Werte erreicht. Dabei ist die Innendruck-Änderung umgekehrt proportional zur Quadratwurzel des Molekulargewichts M, also proportional zu $M^{-1/2}$.

Den gleichen Effekt hat eine Lagerung bei höherer Temperatur T als Umgebungstemperatur, da dann die Moleküle des Gases aufgrund von deren größerer Beweglichkeit in undichte Stellen schneller eindringen und somit ebenfalls zur schnelleren Verschlechterung des Vakuums in der Kammer mit dessen Folgen beitragen. Dabei ist die Änderung des Innendrucks proportional zur Quadratwurzel $T^{1/2}$ der Temperatur T.

Schließlich hat auch ein erhöhter Gasdruck eine vergleichbare Wirkung. Dabei ist die Innendruck-Änderung direkt proportional zur Druckerhöhung.

Nach der Lagerung mit den gewählten Randbedingungen, also am Ende der Zeitdauer t, wird der bereits erwähnte zweite Nullwert $c_{n2} = -k_1 p_0' + k_0$ bei jedem Absolutdruck-Sensor gemessen, und es wird der zu jedem Absolutdruck-Sensor gehörende individuelle Wert $\delta c_n/c_{sp}$ der auf die Meßwert-Spanne $c_{sp}$ bezogenen Differenz $\delta c_n = -k_1 \delta p_0$ gebildet. Dieser Wert von $\delta c_n/c_{sp}$ wird mit dem auf die Meßwert-Spanne $c_{sp}$ bezogenen Wert $F_n/c_{sp}$ des Nullpunkt-Meßfehlers $F_n$ der Kapazitätsnullpunkt-Meßvorrichtung verglichen.

Die Nullpunkt-Langzeitstabilität-Fehlerklassen werden anhand von einem mit einem Sicherheitsabstand oberhalb des auf die Meßwert-Spanne $c_{sp}$ bezogenen Wertes $F_n/c_{sp}$ des Nullpunkt-Meßfehlers $F_n$ benutzerseitig vorgebbaren Minimalwert gebildet. Zweckmäßigerweise wird dieser Minimalwert mindestens doppelt, insbesondere viermal, so groß wie der Wert $F_n/c_{sp}$ gewählt.

Die Fehlerklassen können sich z.B. durch ganzzahlige Vielfache des Minimalwerts voneinander unterscheiden. Dabei haben Absolutdruck-Sensoren, die zu höheren der derart definierten Fehlerklassen gehören, zunehmend schlechtere Nullpunkt-Langzeit-Stabilitäten.

Wie Untersuchungen und Berechnungen der Erfinder gezeigt haben, setzt sich bei der Messung des Nullpunkts die meßwert-spanne-bezogene Meßungenauigkeit, im folgenden als relative Meßungenauigkeit bezeichnet, aus folgenden Anteilen a), b), c) und d) zusammen:

a) aus der relativen Meßungenauigkeit durch den mehrfachen Ein- und Ausbau des einzelnen Absolutdruck-Sensors in und aus einer Meßfassung des Kapazitätsnullpunkt-Meßgeräts,
b) aus der relativen Meßungenauigkeit aufgrund von Änderungen der Umgebungstemperatur,
c) aus der relativen Meßungenauigkeit aufgrund des zwar äußerst geringen, aber doch endlichen Vakuumrestdrucks innerhalb der Meßfassung der Absolutdruck-Sensoren und
d) aus der vernachlässigbaren relativen Meßungenauigkeit der Kapazitätsnullpunkt-Meßvorrichtung.

Für den Anteil a) wurde ein maximaler Wert von 0,095 %, für den Anteil b) wurde ein maximaler Wert von 0,065 %, und für den Anteil c) wurde ein maximaler Wert von 0,015 % ermittelt. Zusammen ergibt sich also theoretisch die meßwert-spanne-bezogene Meßungenauigkeit zu maximal 0,18 %.

Durch Messungen wurde festgestellt, daß sie sogar nur maximal 0,12 % beträgt.

Nach der zweiten Variante der Erfindung wird unter Vakuum, also p --> 0 - das entspricht $p \approx 0$ - zunächst bei mindestens zwei benutzerseitig vorgebbaren unterschiedlichen Temperaturwerten $T_1$, $T_2$, von denen einer insbesondere die Raumtemperatur ist, anhand der Gleichung $Tk_c = (c_{T2} - c_{T1})/(T_2 - T_1)$ ein erster Wert $Tk_{c1}$ des Temperatur-Koeffizienten $Tk_c$ des Nullpunkts bestimmt, nämlich $Tk_{c1} = (C_{p2} \cdot C_{r1} - C_{p1} \cdot C_{r2})/\{C_{p2} \cdot C_{p1}(T_2 - T_1)\}_{p=p0}$. In dieser Gleichung sind durch die Indizes 1, 2 die jeweiligen Druck-Meßwerte von $C_p$, $C_r$ bei den beiden Temperaturwerten $T_1$, $T_2$ bezeichnet.

Nach dem Gesetz von Gay-Lussac gilt bei Temperatur-Änderungen für den temperatur-abhängigen Innendruck $p_0(T)$ der Absolutdruck-Sensoren: $p_0(T) = \{1 + \alpha(T - T_0)\} \cdot p_0(T_0)$, wobei der Index 0 die entsprechenden Werte bei einer Bezugstemperatur, insbesondere Raumtemperatur, markiert und $\alpha \approx 0,004\ K^{-1}$ der kubische Wärme-Ausdehnungskoeffizient von Gasen ist.

Die Steigung $dp_0(T)/dT$ dieser Funktion ist somit: $dp_0(T)/dT = \alpha \cdot p_0(T)$. Andererseits gilt für die Steigung dc(p)/dp der obigen Druckabhängigkeitsfunktion des Nullpunkts $c = k_1(p - p_0) + k_0 : dc(p)/dp = - k_1$ .

Eine Messung des Temperatur-Koeffizienten $Tk_{c2}$ zu einem späteren Zeitpunkt $t_2$ an einem undichten Absolutdruck-Sensor ergibt: $Tk_{c2} = Tk_{c1} + \delta Tk_c$ . Für $\delta Tk_c$ ergibt sich aus den obigen beiden Gleichungen $dp_0(T)/dT = \alpha \cdot p_0(T)$ und $dc(p)/dp = - k_1 : \delta Tk_c = - k_1 \cdot \alpha \cdot \delta p$ . Der entsprechende auf die oben definierte Meßwert-Spanne bezogene Term ist dann:

$$\delta Tk_c/c_{sp} = - (\alpha \cdot \delta p)/pn.$$

Wenn man den obigen Wert 0,004 $K^{-1}$ für $\alpha$ einsetzt, so ergibt sich für eine undichtheit-bedingte Innendruck-Änderung von 0,1 % ein Wert für $Tk_c/c_{sp}$ von 0,04 % / 100 K = $4 \cdot 10^{-4}$ %·$K^{-1}$ .

Auch bei der zweiten Variante der Erfindung wird daher am Ende einer Zeitdauer t der Temperatur-Koeffizient $Tk_c$ mittels derselben Kapazitätsnullpunkt-Temperaturkoeffizient-Meßvorrichtung und bei den gleichen, mindestens zwei Temperaturwerten $T_1$, $T_2$ wie bei der ersten Messung erneut gemessen, was bei undichten Absolutdruck-Sensoren somit einen vom obigen ersten Wert $Tk_{c1}$ abweichenden zweiten Wert $Tk_{c2}$ des Temperatur-Koeffizienten des Nullpunkts ergibt. Für den zweiten Wert gilt:

$$Tk_{c2} = (C_{p2} \cdot C_{r1} - C_{p1} \cdot C_{r2})/\{C_{p2} \cdot C_{p1}(T_2 - T_1)\}_{p=p0}\cdot.$$

Soll nun z.B. eine Nullpunkt-Langzeitstabilität von < 0,1 %/a garantiert werden können, so darf der (mathematische) Betrag der Differenz $\delta Tk_c = Tk_{c1} - Tk_{c2}$ , bezogen auf die Meßwert-Spanne $c_{sp}$, Getragen: $|\delta Tk_c/c_{sp}| \leq 0,04$ % / 100 K .

Es wird wieder vorausgesetzt, daß die Messungen zu den erwähnten Zeitpunkten, nämlich zu Beginn und am Ende der Zeitdauer t, mit demselben Temperaturkoeffizient-Meßfehler $F_T$ der hochgenauen Kapazitätsnullpunkt-Temperaturkoeffizient-Meßvorrichtung behaftet sind, daß also deren Temperaturkoeffizient-Meßfehler $F_T$ konstant geblieben ist.

Dieser Temperaturkoeffizient-Meßfehler $F_T$ liegt aber wieder in derselben Größenordnung wie die gemessene, auf die Meßwert-Spanne bezogene Differenz $\delta Tk_c/c_{sp}$, d.h. erst nach der eingangs erwähnten Zeit in der Größenordnung von mindestens einem Jahr ist $\delta Tk_c/c_{sp}$ so groß geworden, daß es sich vom Temperaturkoeffizient-Meßfehler $F_T$ meßbar unterscheidet, also z.B. mindestens gleich $2 \cdot F_T$ ist.

Die folgenden Verfahrensschritte der zweiten Variante der Erfindung dienen nun der Abkürzung dieser zu langen Zeit, also dazu, die Signifikanz von $\delta Tk_c/c_{sp}$ gegenüber $F_T$ schon zu einem wesentlich früheren Zeitpunkt eintreten zu lassen.

Dazu werden die Absolutdruck-Sensoren während einer Zeitdauer t wieder in einem Gas derart gelagert, z. B. indem sie in einen das Gas enthaltenden Behälter eingeschlossen werden, daß von den folgenden drei Parametern Druck, Temperatur und Molekulargewicht des Gases mindestens ein Parameter gegenüber normalen Atmosphären-Bedingungen, nämlich Raumtemperatur, Luft und Normaldruck der letzteren, erhöht ist, nämlich die Temperatur und/ oder der Druck, bzw. erniedrigt ist, nämlich das Molekulargewicht.

Die Erniedrigung des Molekulargewichts gegenüber der von Luft läßt sich durch die Wahl von Wasserstoff oder Helium als Gas, in dem die Absolutdruck-Sensoren gelagert werden, erreichen. Aufgrund von deren geringerem Molekulargewicht als Luft gelangen die Moleküle schneller als die von Luft durch Undichtheiten in die Kammer der Absolutdruck-Sensoren, so daß sich deren Vakuum schneller verschlechtert und daher $\delta Tk_c/c_{sp}$ schneller signifikante Werte erreicht.

Den gleichen Effekt hat eine Lagerung bei höherer Temperatur als Umgebungstemperatur, da dann die Moleküle des Gases aufgrund von deren größerer Beweglichkeit in undichte Stellen schneller eindringen und somit ebenfalls zur schnelleren Verschlechterung des Vakuums in der Kammer mit dessen Folgen beitragen.

Nach der Lagerung mit den gewählten Randbedingungen, also am Ende der Zeitdauer t, wird der bereits erwähnte zweite Wert $Tk_{c2} = (C_{p2} \cdot C_{r1} - C_{p1} \cdot C_{r2})/\{C_{p2} \cdot C_{p1}(T_2 - T_1)\}_{p=p0'}$ des Temperatur-Koeffizienten des Nullpunkts bei jedem Absolutdruck-Sensor gemessen, und es wird der zu jedem Absolutdruck-Sensor gehörende individuelle Wert $\delta Tk_c/c_{sp}$ der auf die Meßwert-Spanne $c_{sp}$ bezogenen Differenz $\delta Tk_c$ gebildet. Dieser Wert von $\delta Tk_c/c_{sp}$ wird mit dem auf die Meßwert-Spanne $c_{sp}$ bezogenen Wert $F_T/c_{sp}$ des Temperaturkoeffizient-Meßfehlers $F_T$ der Kapazitätsnullpunkt-Temperaturkoeffizient-Meßvorrichtung verglichen.

Die Nullpunkt-Langzeitstabilität-Fehlerklassen werden wieder anhand von einem mit einem Sicherheitsabstand oberhalb des auf die Meßwert-Spanne $c_{sp}$ bezogenen Wertes $F_T/c_{sp}$ des Temperaturkoeffizient-Meßfehlers $F_T$ benutzerseitig vorgebbaren Minimalwert gebildet. Zweckmäßigerweise wird dieser Minimalwert mindestens doppelt, insbesondere viermal, so groß wie der Wert $F_T/c_{sp}$ gewählt.

Die Fehlerklassen können sich wieder z.B. durch ganzzahlige Vielfache des Minimalwerts voneinander unterscheiden. Dabei haben Absolutdruck-Sensoren, die zu höheren der derart definierten Fehlerklassen gehören, zunehmend schlechtere Nullpunkt-Langzeit-Stabilitäten.

**Patentansprüche**

1. Verfahren zum Herstellen von in hochgenauen, auf eine Meßwert-Spanne bezogenen Nullpunkt-Langzeitstabilitäts-Fehlerklassen sortierten kapazitiven Absolutdruck-Sensoren aus Aluminiumoxid-Keramik, das folgende Schritte umfaßt:

   - ein scheibenförmiger Grundkörper wird auf einer Oberfläche in der Nähe von deren Rand mit einer ringförmigen ersten, als eine erste Elektrode dienenden Metallschicht und im Zentrum der Oberfläche mit einer kreisförmigen zweiten, als eine zweite Elektrode dienenden Metallschicht versehen,

      -- welche Elektroden voneinander isoliert sind,

   - eine Membran wird an einer Oberfläche mit einer weiteren, als dritte Elektrode dienenden Metallschicht versehen,
   - die drei Elektroden werden mit äußeren Anschlüssen versehen,
   - Grundkörper und Membran werden mit den einander zugewandten, die Elektroden tragenden Oberflächen an jeweils einem äußeren Rand durch Zwischenlage eines Aktivhartlotrings unter Bildung einer Kammer

      -- entweder in Vakuum dicht miteinander verbunden
      -- oder in Schutzgas dicht miteinander verbunden und die Kammer wird danach evakuiert,

   - wodurch sich bei Einwirkung eines äußeren Drucks p auf den Absolutdruck-Sensor zwischen der ersten und der dritten Elektrode eine praktisch druckunabhängige Referenz-Kapazität $C_r$ und zwischen der zweiten und der dritten Elektrode eine druckabhängige Kapazität $C_p$ ergibt,
   - für jeden Absolutdruck-Sensor wird mittels einer hochgenauen Kapazitätsnullpunkt-Meßvorrichtung, die einen garantierten Nullpunkt-Meßfehler $F_n$ hat, bei einem benutzerseitig vorgebbaren ersten Temperaturwert, insb. bei Raumtemperatur, unter Vakuum, entsprechend p --> 0, anhand der Gleichung $c = (C_p - C_r)/C_p = k_1(p - p_0) + k_0$ , worin $p_0$ der Druck des im Inneren der Kammer vorhandenen Vakuums und $k_0$, $k_1$ sensor-spezifische Konstanten sind, ein erster Nullwert $c_{n1} = - k_1 p_0 + k_0$ bestimmt,
   - für jeden Absolutdruck-Sensor wird mittels derselben Kapazitätsnullpunkt-Meßvorrichtung ein zweiter Nullwert $c_{n2} = - k_1 p_0' + k_0$ bestimmt,

      -- nachdem während einer Zeitdauer t die Absolutdruck-Sensoren in einem Gas derart gelagert worden sind,

         --- daß von dessen folgenden drei Parametern Druck, Temperatur und Molekulargewicht mindestens einer gegenüber normalen Atmosphären-Bedingungen, nämlich Raumtemperatur, Luft und deren Normaldruck, erhöht worden war, nämlich die Temperatur und/oder der Druck, bzw. erniedrigt worden war, nämlich das Molekulargewicht,

   - es wird die Differenz $\delta c_n$ des ersten und des zweiten Nullwerts

$$\delta c_n = c_{n1} - c_{n2} = - k_1(p_0 + p_0') = - k_1 \delta p_0'$$

   gebildet,
   - es wird der Wert $\delta c_n/c_{sp}$ der auf die Meßwert-Spanne $c_{sp}$ bezogenen Differenz $\delta c_n = - k_1 \delta p_0'$ jedes Absolutdruck-Sensors gebildet und mit dem auf die Meßwert-Spanne $c_{sp}$ bezogenen Wert $F_n/c_{sp}$ des Nullpunkt-Meßfehlers $F_n$ der Kapazitätsnullpunkt-Meßvorrichtung verglichen, und
   - die Nullpunkt-Langzeitstabilität-Fehlerklassen werden anhand von einem mit einem Sicherheitsabstand oberhalb des auf die Meßwert-Spanne $c_{sp}$ bezogenen Wertes $F_n/c_{sp}$ des Nullpunkt-Meßfehlers $F_n$ benutzerseitig vorgebbaren Minimalwert gebildet.

2. Verfahren zum Herstellen von in hochgenauen, auf eine Meßwert-Spanne bezogenen Nullpunkt-Langzeitstabilitäts-Fehlerklassen sortierten kapazitiven Absolutdruck-Sensoren aus Aluminiumoxid-Keramik, das folgende Schritte umfaßt:

- ein scheibenförmiger Grundkörper wird auf einer Oberfläche in der Nähe von deren Rand mit einer ringförmigen ersten, als eine erste Elektrode dienenden Metallschicht und im Zentrum der Oberfläche mit einer kreisförmigen zweiten, als eine zweite Elektrode dienenden Metallschicht versehen,

  -- welche Elektroden voneinander isoliert sind,

- eine Membran wird an einer Oberfläche mit einer weiteren, als dritte Elektrode dienenden Metallschicht versehen,
- die drei Elektroden werden mit äußeren Anschlüssen versehen,
- Grundkörper und Membran werden mit den einander zugewandten, die Elektroden tragenden Oberflächen an jeweils einem äußeren Rand durch Zwischenlage eines Aktivhartlotrings unter Bildung einer Kammer

  -- entweder in Vakuum dicht miteinander verbunden
  -- oder in Schutzgas dicht miteinander verbunden und die Kammer wird danach evakuiert,

- wodurch sich bei Einwirkung eines äußeren Drucks p auf den Absolutdruck-Sensor zwischen der ersten und der dritten Elektrode eine praktisch druck-unabhängige Referenz-Kapazität $C_r$ und zwischen der zweiten und der dritten Elektrode eine druck-abhängige Kapazität $C_p$ ergibt, deren druck-abhängiges Kapazitätsverhältnis $c = (C_p - C_r)/C_p = k_1(p - p_0) + k_0$ ist, worin $p_0$ der Druck des im Inneren der Kammer vorhandenen Vakuums und $k_0$, $k_1$ sensor-spezifische Konstanten sind,
- für jeden Absolutdruck-Sensor wird mittels einer hochgenauen Kapazitätsnullpunkt-Temperaturkoeffizient-Meßvorrichtung unter Vakuum, entsprechend p --> 0, bei mindestens zwei benutzerseitig vorgebbaren unterschiedlichen Temperaturwerten $T_1$, $T_2$, von denen einer insbesondere die Raumtemperatur ist, anhand der Gleichung $Tk_c = (c_{T2} - c_{T1})/(T_2 - T_1)$ ein erster Wert $Tk_{c1}$ des Temperatur-Koeffizienten $Tk_c$ des Nullpunkts bestimmt, nämlich

$$Tk_{c1} = (C_{p2} \cdot C_{r1} - C_{p1} \cdot C_{r2})/\{C_{p2} \cdot C_{p1}(T_2 - T_1)\}_{p=p0}$$

- für jeden Absolutdruck-Sensor wird mittels derselben Kapazitätsnullpunkt-Temperaturkoeffizient-Meßvorrichtung und bei denselben Temperaturwerten $T_1$, $T_2$ ein zweiter Wert $Tk_{c2}$ des Temperatur-Koeffizienten $Tk_c$ des Nullpunkts bestimmt, nämlich

$$Tk_{c2} = (C_{p2} \cdot C_{r1} - C_{p1} \cdot C_{r2})/\{C_{p2} \cdot C_{p1}(T_2 - T_1)\}_{p=p0'}$$

  -- nachdem während einer Zeitdauer t die Absolutdruck-Sensoren in einem Gas derart gelagert worden sind,

    --- daß von dessen folgenden drei Parametern, Druck, Temperatur und Molekulargewicht mindestens einer gegenüber normalen Atmosphären-Bedingungen, nämlich Raumtemperatur, Luft und deren Normaldruck, erhöht worden war, nämlich die Temperatur und/oder der Druck, bzw.erniedrigt worden war, nämlich das Molekulargewicht,

- es wird die Differenz $\delta Tk_c$ des ersten und des zweiten Wertes des Temperatur-Koeffizienten $\delta Tk_c = Tk_{c1} - Tk_{c2}$ gebildet,
- es wird der Wert $\delta Tk_c/c_{sp}$ der auf die Meßwert-Spanne $c_{sp}$ bezogenen Differenz $\delta Tk_c = Tk_{c1} - Tk_{c2}$ jedes Absolutdruck-Sensors gebildet und mit dem auf die Meßwert-Spanne $c_{sp}$ bezogenen Wert $F_T/c_{sp}$ des Temperaturkoeffizient-Meßfehlers $F_T$ der Kapazitätsnullpunkt-Temperaturkoeffizient-Meßvorrichtung verglichen, und
- die Nullpunkt-Langzeitstabilität-Fehlerklassen werden anhand von einem mit einem Sicherheitsabstand oberhalb des auf die Meßwert-Spanne $c_{sp}$ bezogenen Wertes $F_T/c_{sp}$ des Temperaturkoeffizient-Meßfehlers $F_T$ benutzerseitig vorgebbaren Minimalwert gebildet.

3. Verfahren nach Anspruch 1 oder 2, bei dem die erste und die zweite Elektrode so aufgebracht werden, daß sie praktisch den gleichen Flächeninhalt aufweisen.

**Claims**

1.  A method for producing capacitive alumina-ceramic absolute pressure sensors sorted in high-precision zero-point long-term stability defect classes referred to a measured-value span, which comprises the following steps:

    a disk-shaped substrate is provided on a surface in the vicinity of its edge with an annular first metal layer, serving as a first electrode, and at the center of the surface with a circular second metal layer, serving as a second electrode,
       which electrodes are insulated from one another,

    a diaphragm is provided on a surface with a further metal layer, serving as a third electrode,

    the three electrodes are provided with external terminals,

    either the substrate and diaphragm are joined tightly together in a vacuum by the mutually facing surfaces carrying the electrodes, at an outer edge in each case, through the interposition of an active brazing ring with the formation of a chamber

    or the substrate and diaphragm are joined tightly together in a protective gas by the mutually facing surfaces carrying the electrodes, at an outer edge in each case, through the interposition of an active brazing ring with the formation of a chamber and the chamber is thereafter evacuated,

    the result being to produce, in conjunction with the action of an external pressure p on the absolute pressure sensor, a virtually pressure-independent reference capacitance $C_r$ between the first and third electrodes and a pressure-dependent capacitance $C_p$ between the second and third electrodes,

    at a first temperature value prescribable by the user, in particular at room temperature, and under a vacuum, corresponding to p --> 0, with the aid of the equation $c = (C_p - C_r)/C_p = k_1(p - p_0) + k_0$, wherein $p_0$ is the pressure of the vacuum present in the interior of the chamber and $k_0$, $k_1$ are sensor-specific constants, a first zero value $c_{n1} = k_1 p_0 + k_0$ is determined for each absolute pressure sensor by means of a high-precision capacitance zero-point measuring device which has a guaranteed zero-point measuring error $F_n$,

    a second zero value $c_{n2} = -k_1 p_0' + k_0$ is determined for each absolute pressure sensor by means of the same capacitance zero-point measuring device,
       after the absolute pressure sensors have been stored during a period t in a gas in such a way that

       either the pressure and/or the temperature of said gas was raised with respect to normal atmospheric conditions, i.e. room temperature, air and the normal pressure thereof,
       or said gas was replaced by another gas with a lower molecular weight,

    the difference $\delta c_n$ between the first and second zero values $\delta c_n = c_{n1} - c_{n2} = -k_1(p_0 + p_0') = -k_1 \delta p_0$ is formed,

    the value $\delta c_n/c_{sp}$ being the difference $\delta c_n = -k_1 \delta p_0$ divided by the measured-value span $c_{sp}$ of each absolute pressure sensor is formed and compared with the value $F_n/c_{sp}$ being said zero-point measuring error $F_n$ divided by the measured-value span $c_{sp}$, and

    the zero-point long-term stability defect classes are formed with the aid of a minimum value prescribable by the user with a safety clearance above said value $F_n/c_{sp}$.

2.  A method for producing capacitive alumina-ceramic absolute pressure sensors sorted in high-precision zero-point long-term stability defect classes referred to a measured-value span, which comprises the following steps:

    a disk-shaped substrate is provided on a surface in the vicinity of its edge with an annular first metal layer, serving as a first electrode, and at the center of the surface with a circular second metal layer, serving as a second electrode,
       which electrodes are insulated from one another,

    a diaphragm is provided on a surface with a further metal layer, serving as a third electrode,

the three electrodes are provided with external terminals,

either the substrate and diaphragm are joined tightly together in a vacuum by the mutually facing surfaces carrying the electrodes, at an outer edge in each case, through the interposition of an active brazing ring with the formation of a chamber

or the substrate and diaphragm are joined tightly together in a protective gas by the mutually facing surfaces carrying the electrodes, at an outer edge in each case, through the interposition of an active brazing ring with the formation of a chamber and the chamber is thereafter evacuated,

the result being to produce, in conjunction with the action of an external pressure p on the absolute pressure sensor, a virtually pressure-independent reference capacitance $C_r$ between the first and third electrodes and a pressure-dependent capacitance $C_p$ between the second and third electrodes, whose pressure-dependent capacitance ratio is $c = (C_p - C_r)/C_p = k_1(p - p_0) + k_0$, wherein $p_0$ is the pressure of the vacuum present in the interior of the chamber and $k_0$, $k_1$ are sensor-specific constants,

at at least two different temperatures $T_1$, $T_2$ prescribable by the user, of which one is the room temperature, in particular, and under a vacuum, corresponding to $p \to 0$, a first value $Tk_{c1}$ of the temperature coefficient $Tk_c$ of the zero-point is determined with the aid of the equation $Tk_{c1} = (C_{p2} \cdot C_{r1} - C_{p1} \cdot C_{r2})/\{C_{p2} \cdot C_{p1}(T_2 - T_1)\}_{p=p0}$ for each absolute pressure sensor by means of a high-precision capacitance zero-point temperature coefficient measuring device, which has a guaranteed temperature coefficient measuring error $F_T$,

a second value $Tk_{c2}$ of the temperature coefficient $Tk_c$ of the zero-point is determined with the aid of the equation
$Tk_{c2} = (C_{p2} \cdot C_{r1} - C_{p1} \cdot C_{r2})/\{C_{p2} \cdot C_{p1}(T_2 - T_1)\}_{p=p0}$, for each absolute pressure sensor by means of the same capacitance zero-point temperature coefficient measuring device and at the same temperature values $T_1$, $T_2$, after the absolute pressure sensors have been stored during a period t in a gas in such a way that

either the pressure and/or the temperature of said gas was raised with respect to normal atmospheric conditions, i.e. room temperature, air and the normal pressure thereof,
or said gas was replaced by another gas with a lower molecular weight,

the difference $\delta Tk_c$ between the first and second values of the temperature coefficient $\delta Tk_c = Tk_{c1} - Tk_{c2}$ is formed,

the value $\delta Tk_c/c_{sp}$ being the difference $\delta Tk_c = Tk_{c1} - Tk_{c2}$ divided by the measured-value span $c_{sp}$ of each absolute pressure sensor is formed and compared with the value $F_T/c_{sp}$ being said temperature coefficient measuring error $F_T$ divided by the measured-value span $c_{sp}$, and

the zero-point long-term stability defect classes are formed with the aid of a minimum value prescribable by the user with a safety clearance above said value $F_T/c_{sp}$.

3. The method as claimed in claim 1 or 2, in which the first and second electrodes are applied in such a way that they virtually have the same surface area.

**Revendications**

1. Procédé de fabrication de capteurs de pression absolue capacitifs en oxyde d'aluminium classés en catégories de défauts de stabilité à long terme du point zéro très précises, rapportées à un écart de valeur de mesure, qui comprend les phases suivantes:

-   un corps de base en forme de disque est muni sur une surface, à proximité de son bord, d'une première couche métallique de forme annulaire servant de première électrode et, au centre de la surface, d'une deuxième couche métallique de forme circulaire servant de deuxième électrode,

--   les électrodes sont isolées l'une de l'autre,

- une membrane est munie sur une surface d'un autre couche métallique servant de troisième électrode,

- les trois électrodes sont munies de raccordements extérieurs,

- corps de base et membrane sont assemblés de manière étanche avec les surfaces portant les électrodes tournées l'une vers l'autre, sur un bord extérieur, en intercalant un anneau de métal d'apport actif de brasage fort en formant une chambre,

  -- soit sous vide

  -- soit sous gaz inerte, le vide étant fait ensuite dans la chambre,

- d'où il résulte, lorsqu'une pression extérieure p s'exerce sur un capteur de pression absolue, une capacité de référence $c_r$ pratiquement indépendante de la pression entre la première et la troisième électrode et une capacité $c_p$ dépendante de la pression entre la deuxième et la troisième électrode,

- pour chaque capteur de pression absolue on détermine, au moyen d'un dispositif de mesure du point zéro de capacité de haute précision, qui a un défaut de mesure du point zéro $F_n$ garanti, à une première température pouvant être prédéterminée par l'utilisateur, en particulier à la température ambiante, sous vide, correspondant à $p \rightarrow 0$, une première valeur zéro $c_{n1} = - k_1 p_0 + k_0$ à l'aide de l'équation $c = (c_p - c_r) / c_p = k_1 (p - p_0) + k_0$, dans laquelle $p_0$ est la pression du vide régnant à l'intérieur de la chambre et $k_0$, $k_1$ sont des constantes spécifiques au capteur,

- pour chaque capteur de pression absolue on détermine au moyen du même dispositif de mesure du point zéro de capacité une deuxième valeur zéro $C_{n2} = -k_1 p_0 + k_0$.

- après que les capteurs de pression absolue ont été stockés pendant un temps t dans un gaz, de telle manière que

  --- des trois paramètres suivants: pression, température et poids moléculaire, au moins un paramètre, à savoir la température et/ou la pression a été élevé par rapport aux conditions atmosphériques normales qui sont la température ambiante, l'air et la pression normale de l'air, et au moins un a été abaissé, à savoir le poids moléculaire,

- on détermine la différence $\delta c_n$ entre la première et la deuxième valeur zéro $\delta c_n = c_{n1} - c_{n2} = - k_1 (p_0 + p_{0'}) = - k_1 \delta p_{0'}$,

- on détermine la valeur $\delta c_n / c_{sp}$ de la différence $\delta c_n = - k_1 \delta p_{0'}$, rapportée à l'écart de valeur de mesure $c_{sp}$, de chaque capteur et on la compare avec la valeur $F_n / c_{sp}$, rapportée à l'écart de mesure $c_{sp}$, du défaut de point zéro $F_n$ du dispositif de mesure du point zéro de capacité, et

- on forme les classes de défauts de stabilité à long terme du point zéro à l'aide d'une valeur minimale pouvant être prédéterminée par l'utilisateur avec un écart de sécurité supérieur à la valeur $F_n / c_{sp}$ rapportée à l'écart de valeur de mesure $c_{sp}$ du défaut de mesure du point zéro $F_n$.

2. Procédé de fabrication de capteurs de pression absolue capacitifs en oxyde d'aluminium classés en catégories de défauts de stabilité à long terme du point zéro très précises, rapportées à un écart de valeur de mesure, qui comprend les étapes suivantes:

- un corps de base en forme de disque est muni sur une surface, à proximité de son bord, d'une première couche métallique de forme annulaire servant de première électrode et, au centre de la surface, d'une deuxième couche métallique de forme circulaire servant de deuxième électrode,

- les deux électrodes sont isolées l'une de l'autre,

- une membrane est munie sur une surface c'une autre couche métallique servant de troisième électrode,

- les trois électrodes sont munies de raccordements extérieurs,

- corps de base et membrane sont assemblés de manière étanche avec les surfaces portant les électrodes tournées l'une vers l'autre, sur un bord externe, en intercalant un anneau de métal d'apport actif de brasage fort, en formant une chambre

  -- soit sous vide

  -- soit sous gaz inerte, et la chambre est ensuite mise sous vide,

- d'où il résulte, lorsqu'une pression extérieure p s'exerce sur le capteur de pression absolue, une capacité $c_r$ de référence indépendante de la pression entre la première et la troisième électrode et une capacité $c_p$ dépendante de la pression entre la deuxième et la troisième électrode, dont le rapport de capacité est $c = (c_p - c_r) / c_p = k_1 (p - p_o) + k_o$, $p_o$ étant la pression du vide régnant à l'intérieur de la chambre et ko, $k_1$ étant des constantes spécifiques au capteur,

- pour chaque capteur de pression absolue on détermine au moyen d'un dispositif de mesure du coefficient de température de point zéro de capacité de haute précision sous vide, correspondant à $p \rightarrow 0$, pour au moins deux valeurs de température $T_1$, $T_2$ différentes, dont l'une est en particulier la température ambiante, pouvant être prédéterminées par l'utilisateur, une première valeur $Tk_{c1}$ du coefficient de température du point zéro $Tk_c$, à l'aide de l'équation $Tk_c = (c_{T2} - c_{T1}) / (T_2 - T_1)$, à savoir $Tk_{c1} = (c_{p2} \cdot c_{r1} - c_{p1} \cdot c_{r2}) / \{c_{p2} \cdot c_{p1} (T_2 - T_1)\}_{p=p0}$

- pour chaque capteur de pression absolue on détermine, au moyen du même dispositif de mesure du coefficient de température du point zéro de capacité et pour les mêmes températures $T_1$, $T_2$, une deuxième valeur $Tk_{c2}$ du coefficient de température du point zéro $Tk_c$, à savoir $Tk_{c2} = (c_{p2} \cdot c_{r1} - c_{p1} \cdot c_{r2}) / \{c_{p2} \cdot C_{p1} (T_2 - T_1)\}_{p=p0'}$

  -- après que les capteurs de pression absolue ont été stockés dans un gaz pendant un temps t de telle manière que

  --- des trois paramètres du gaz suivants: pression, température et poids moléculaire, au moins un paramètre, à savoir la température et/ou la pression, a été élevé par rapport aux conditions atmosphériques normales qui sont la température ambiante, l'air et la pression de l'air, et au moins un a été abaissé, à savoir le poids moléculaire,

- on détermine la différence $\delta Tk_c$ entre la première et la deuxième valeur du coefficient de température $\delta Tk_c = Tk_{c1} - Tk_{c2}$,

- on détermine la valeur $\delta Tk_c / c_{sp}$ de la différence $\delta Tk_c = Tk_{c1} - Tk_{c2}$, rapportée à l'écart de valeur de mesure $c_{sp}$, de chaque capteur de pression absolue et on la compare avec la valeur $F_T / c_{sp}$, rapportée à l'écart de mesure $c_{sp}$, du défaut de coefficient de température $F_T$ du dispositif de mesure du coefficient de température du point zéro de capacité, et

- on forme les classes de défauts de stabilité à long terme de point zéro à l'aide d'une valeur minimale pouvant être prédéterminée par l'utilisateur avec un écart de sécurité supérieur à la valeur $F_T/c_{sp}$, rapportée à l'écart de mesure $c_{sp}$, du défaut de mesure du coefficient de température $F_T$.

**3.** Procédé selon la revendication 1 ou 2, dans lequel la première et la deuxième électrode sont réalisées de manière à présenter pratiquement la même superficie.